# EUROPÄISCHE PATENTSCHRIFT

(11) **EP 1 376 797 B1**
(45) Veröffentlichungstag und Bekanntmachung des Hinweises auf die Patenterteilung: **10.12.2008**
(21) Anmeldenummer: 03010253.7
(22) Anmeldetag: 07.05.2003
(51) Int. Cl.: H02G 3/04

(54) **Verdrahtungskanal**
Wiring duct
Canalisation de cablage

(30) Priorität: 19.06.2002 DE 20209520 U
(43) Veröffentlichungstag der Anmeldung: 02.01.2004
(73) Patentinhaber: Tehalit GmbH, 67716 Heltersberg (DE)
(72) Erfinder: Eberle, Patrick, 66292 Riegelsberg (DE)
(74) Vertreter: Patentanwälte Möll und Bitterich

(56) Entgegenhaltungen:
- EP-A- 0 493 164
- FR-A- 2 777 129

## Beschreibung

Die Erfindung betrifft Verdrahtungskanäle gemäß dem Oberbegriff des Anspruchs 1.

Aus der US 3 890 459 ist ein Verdrahtungskanal bekannt, der aus einem Kanalunterteil mit U-förmigem Querschnitt besteht, gebildet durch einen Boden und zwei Seitenwände. Die Seitenwände werden gebildet durch regelmäßig beabstandete Stege, deren Enden so geformt sind, dass ein Deckel lösbar aufgerastet werden kann. Um bei einer senkrechten oder waagerechten Montage das Herausfallen von Kabeln und Leitungen aus dem geöffneten Kanalunterteil zu verhindern, sind Kabelrückhalteleisten vorgesehen. Diese besitzen einen Fuß, der so geformt ist, dass die Kabelrückhalteleiste zwischen zwei Stegen klemmend befestigt werden kann.

Es hat sich in der Praxis herausgestellt, dass die Verbindung zwischen Kabelrückhalteelement und Stegen wenig zuverlässig ist. Die wesentliche Ursache dafür liegt in der geringen Stabilität der einzelnen Stege. Zur Behebung dieses Nachteils wurden Kabelrückhalteelemente entwickelt, die sich über die volle Höhe der Stege erstrecken und innen an die Seitenwand angelehnt oder angeclipst werden. Man vergleiche die DE 22 01 211 C oder die FR 27 77 129 A. Diese Kabelrückhalteelemente haben zwar einen festen Halt im Verdrahtungskanal, sind jedoch nicht mehr höhenverstellbar, so dass bei einem nur teilgefüllten Verdrahtungskanal die Kabel und Leitungen nicht mehr fixiert sind. Außerdem können diese Kabelrückhalteelemente nur bei leerem Kanal montiert und demontiert werden.

Es wurde auch schon versucht, völlig ohne Kabelrückhalteelemente auszukommen, indem die freien Enden der Stege vergleichbar einem Flaschenhals stark nach innen gezogen wurde. Man vergleiche die DE 27 14 885 C. Bei einer derartigen Konstruktion ist jedoch das nachträgliche Herausnehmen eines Kabels oder einer Leitung sehr erschwert. Deshalb konnten sich Verdrahtungskanäle mit diesem Querschnitt in der Praxis nicht durchsetzen.

Der vorliegenden Erfindung liegt die Aufgabe zugrunde, einen Verdrahtungskanal der eingangs genannten Art anzugeben, dessen Rückhalteleisten nicht nur jederzeit montiert und demontiert werden können sondern auch in der Höhe verstellbar sind und einen festen Halt haben.

Diese Aufgabe wird gelöst durch einen Verdrahtungskanal mit den Merkmalen des Anspruchs 1.

Wesentlicher Vorteil der erfindungsgemäßen Kabelrückhalteleiste ist die stabile Verbindung zwischen Leiste und Kanal, dadurch bedingt, dass der Leistenfuß aus drei U-förmigen Abschnitten besteht, die drei benachbarte Stege abwechselnd umschlingen. Aufgrund der großen Berührungsfläche ist die Druckbelastung der einzelnen Stege verringert. Gleichzeitig ist die Haftreibung so hoch, dass die Kabelrückhalteleiste fest sitzt. Bei Bedarf jedoch kann die Kabelrückhalteleiste jederzeit verschoben oder auch abgenommen werden.

Um das Aufsetzen der Kabelrückhalteleiste auf die drei benachbarten Stege zu erleichtern, ist gemäß einer Weiterbildung der Erfindung die Unterkante des Klemmfußes trichterförmig gestaltet.

Die Seitenkanten der Stege von Verdrahtungskanälen sind manchmal gerade, beispielsweise wie in der US 3 890 459 dargestellt, oder profiliert, beispielsweise wie in der FR 27 77 129 A dargestellt. Für die zuletzt beschriebenen Verdrahtungskanäle sind gemäß einer Weiterbildung der Erfindung in die Schenkel der drei U-förmigen Abschnitte des Klemmfußes Aussparungen eingearbeitet, passend zu den nasenförmigen Ausbuchtungen an den Seitenkanten der Stege. Sind die Aussparungen auf die Nasen aufgerastet, so ist die Kabelrückhalteleiste in der Höhe fixiert.

Vorteilhafterweise ist in die Halteleiste wenigstens eine Solltrennstelle eingeformt. Dadurch kann der Verwender die Länge der Kabelrückhalteleiste an seine Bedürfnisse individuell anpassen.

Gemäß einer Ausgestaltung der Erfindung ist in die Sichtseite der Kabelrückhalteleiste wenigstens eine Vorrichtung zum Befestigen eines Kennzeichens oder dergleichen eingeformt.

Anhand der Zeichnung soll die Erfindung in Form eines Ausführungsbeispiels näher erläutert werden. Es zeigen die
Fig. 1 bis 3 drei orthogonale Ansichten einer Kabelrückhalteleiste und
Fig. 4 einen Verdrahtungskanal mit montierten Kabelrückhalteleisten.

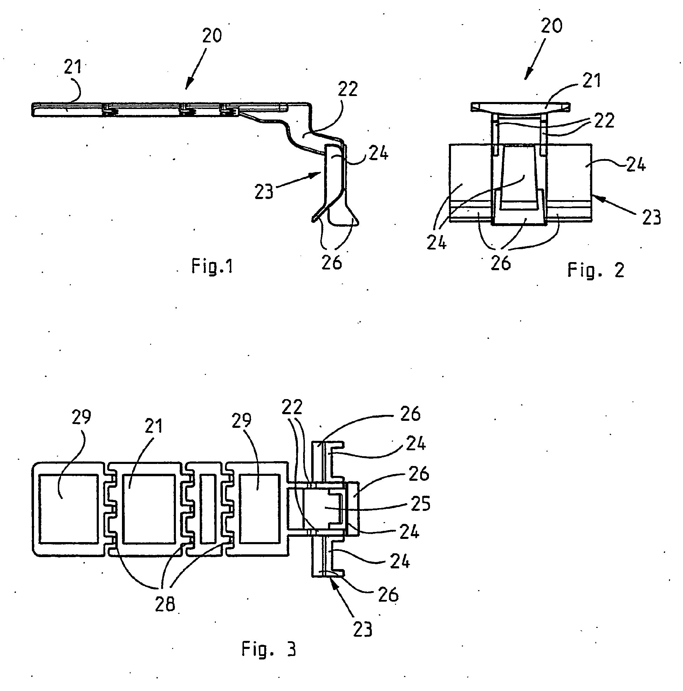

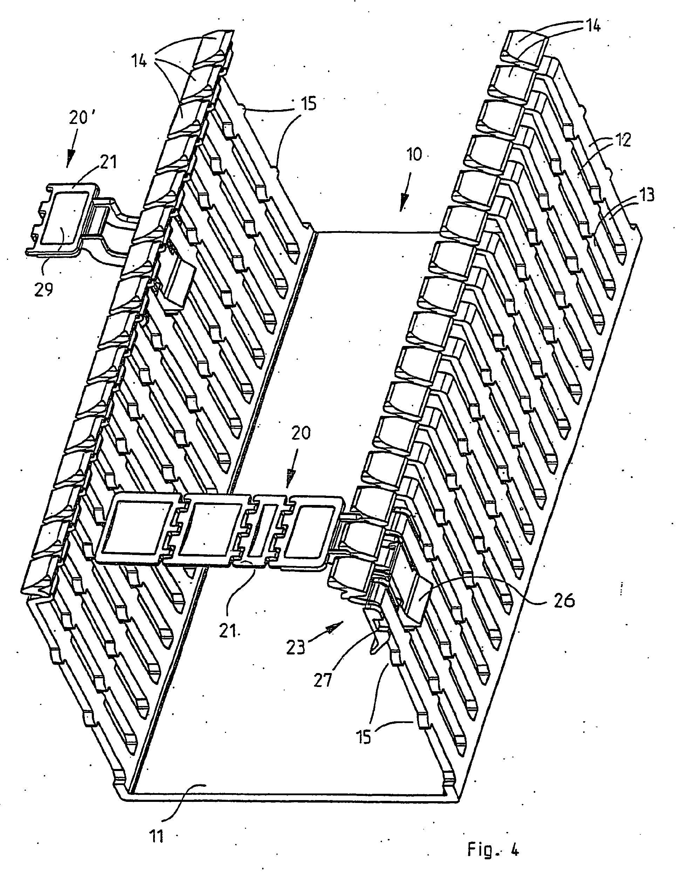

Die Fig. 1 bis 3 zeigen drei orthogonale Ansichten einer Kabelrückhalteleiste 20. Diese besteht aus einer Halteleiste 21, in die eine oder mehrere Solltrennstellen 28 eingeformt sein können. An der Halteleiste 21 ist über zwei parallele, gegenseitig beabstandete Verbindungsleisten 22 ein Klemmfuß 23 angeformt, wodurch ein Freiraum 25 gebildet wird. Der Klemmfuß 23 umfasst drei parallele U-förmige Abschnitte 24, die abwechselnd orientiert sind. Die Unterkante 26 des Klemmfußes 23 ist trichterförmig gestaltet und erleichtert so das Aufsetzen der Kabelrückhalteleiste 20 auf die Stege 12 eines Verdrahtungskanals 10 (Fig. 4).

Fig. 4 zeigt zwei Kabelrückhalteleisten 20, 20', montiert an einem Verdrahtungskanal 10. Dieser besitzt einen etwa U-förmigen Querschnitt, gebildet durch einen Boden 11, zwei Seitenwände, gebildet durch eine regelmäßige Anordnung von Stegen 12, die durch Zwischenräume 13 von einander getrennt sind, und Deckelhalteprofile 14 an den freien Enden der Stege 12.

Die eine Kabelrückhalteleiste 20 ist von oben auf drei benachbarte Stege 12 aufgesteckt, wobei die trichterförmige Gestaltung der Unterkante 26 des Klemmfußes 23 das Aufstecken erleichtert. Die drei U-förmigen Abschnitte des Klemmfußes 23 umschlingen die drei Stege 12 abwechselnd, wodurch sich ein besonders stabiler Halt ergibt. Die Kabelrückhalteleiste 20 kann jedoch bei Bedarf problemlos in der Höhe verschoben werden. Mitverantwortlich dafür ist der zwischen der Halteleiste 21, den Verbindungsleisten 22 und dem Klemmfuß 23 gebildete Freiraum 25.

Sind die Seitenkanten 13 der Stege 12 wie in Fig. 4 dargestellt mit Nasen 15 versehen, so werden in den Schenkeln der U-Abschnitte 24 passende Aussparungen 27 vorgesehen. Dadurch können die Aussparungen 27 auf die Nasen 15 aufgerastet werden, worauf die Kabelrückhalteleiste 20 unverrückbar fixiert ist.

Die zweite Kabelrückhalteleiste 20' ist um 180° gedreht montiert, so dass ihre Halteleiste 21 außerhalb des Verdrahtungskanals 10 liegt. Die Halteleiste 21 ist gekürzt und trägt auf ihrer Sichtseite eine eingeformte Fläche 29 zum Anbringen einer Beschriftung oder sonstigen Markierung.

## Patentansprüche

1. Verdrahtungskanal, im wesentlichen umfassend
- ein Kanalunterteil (10) mit
- einem Boden (11),
- Seitenwänden, gebildet durch eine Vielzahl von gegenseitig beabstandeten Stegen (12) und
- gegebenenfalls Deckelhalteprofilen (14) an den freien Enden der Stege (12),
- und wenigstens eine Kabelrückhalteleiste (20, 20'), lösbar zu befestigen an den Stegen (12), wobei die Kabelrückhalteleiste (20, 20') gebildet ist durch
- eine Halteleiste (21),
- einen Klemmfuß (23),
**dadurch gekennzeichnet, dass**
- die Kabelrückhalteleiste (20, 20') zwei diese miteinander verbindende Verbindungsstege (22), die einen Freiraum (25) umschließen, aufweist,
- der Klemmfuß (23) drei parallele U-förmige Abschnitte (24) umfasst, die abwechselnd drei benachbarte Stege (12) umschlingen.

2. Vorrichtung nach Anspruch 1, **gekennzeichnet durch** das Merkmal:
- die Unterkante (26) des Klemmfußes (23) ist trichterförmig gestaltet.

3. Vorrichtung nach Anspruch 1 oder 2, **gekennzeichnet durch** das Merkmal:
- in die Schenkel der drei U-förmigen Abschnitte (24) des Klemmfußes (23) sind Aussparungen (27) eingearbeitet, passend zu Nasen (25) an den Seitenkanten der Stege (12).

4. Vorrichtung nach einem der Ansprüche 1 bis 3, **gekennzeichnet durch** das Merkmal:
- in die Halteleiste (21) ist eine Solltrennstelle (28) eingeformt.

## Claims

1. Wiring duct, essentially comprising
- a duct lower part (10) with
- a bottom (11),
- side walls, formed by a plurality of mutually spaced webs (12) and
- optionally cover retaining profiles (14) at the free ends of the webs (12),
- and at least one cable retaining strip (20, 20'), to be detachably fastened to the webs (12), wherein the cable retaining strip (20, 20') is formed by
- a retaining strip (21),
- a clamping foot (23),
**characterised in that**
- the cable retaining strip (20, 20') has two connecting webs (22) which connect these together and enclose a free space (25),
- the clamping foot (23) comprises three parallel U-shaped portions (24) which alternately embrace three adjacent webs (12).

2. Device according to Claim 1, **characterised by** the feature:
- the bottom edge (26) of the clamping foot (23) is funnel-shaped.

3. Device according to Claim 1 or 2, **characterised by** the feature:
- recesses (27) are worked into the legs of the three U-shaped portions (24) of the clamping foot (23), matching lugs (25) at the side edges of the webs (12).

4. Device according to any one of Claims 1 to 3, **characterised by** the feature:
- a predetermined separation point (28) is formed into the retaining strip (21).

## Revendications

1. Canal de câblage comprenant, pour l'essentiel,
- une partie inférieure (10) englobant
- un fond (11),
- des parois latérales matérialisées par une multiplicité de membrures (12) distantes les unes des autres et,
- le cas échéant, des profilés (14) de retenue d'un couvercle situés aux extrémités libres desdites membrures (12),
- et au moins une barrette (20, 20') d'arrêt de câbles, conçue pour être fixée amoviblement aux membrures (12), ladite barrette (20, 20') d'arrêt de câbles étant formée
- d'une plaquette d'arrêt (21),
- d'une embase de coincement (23),
**caractérisé par le fait que**
- la barrette (20, 20') d'arrêt de câbles comprend deux membrures de liaison (22) qui assurent sa solidarisation, et ceinturent un espace libre (25),
- l'embase de coincement (23) comprend trois tronçons parallèles (24) configurés en U et enlaçant, en alternance, trois membrures (12) voisines.

2. Dispositif selon la revendication 1, **caractérisé par** la particularité suivante :
- le bord inférieur (26) de l'embase de coincement (23) est de configuration infundibuliforme.

3. Dispositif selon la revendication 1 ou 2, **caractérisé par** la particularité suivante :
- des évidements (27), s'adaptant à des mentonnets (25) situés sur les parois latérales des membrures (12), sont pratiqués dans les branches des trois tronçons (24) en U de l'embase de coincement (23).

4. Dispositif selon l'une des revendications 1 à 3, **caractérisé par** la particularité suivante :
- une zone (28) de rupture par destination est façonnée dans la plaquette d'arrêt (21).
